# EUROPÄISCHE PATENTSCHRIFT

(11) **EP 3 161 237 B1**
(45) Veröffentlichungstag und Bekanntmachung des Hinweises auf die Patenterteilung: **25.07.2018**
(21) Anmeldenummer: 15729202.0
(22) Anmeldetag: 19.06.2015
(51) Int. Cl.: E06B 3/663, E06B 3/673

(54) **ISOLIERVERGLASUNG MIT ABSTANDHALTER UND VERFAHREN ZUR HERSTELLUNG EINER SOLCHEN SOWIE DEREN VERWENDUNG ALS GEBÄUDEVERGLASUNG**
INSULATING GLAZING WITH SPACER AND PRODUCTION METHOD OF SUCH A SPACER AS WELL AS USE OF SUCH A INSULATING GLAZING AS GLAZING FOR A BUILDING
VITRAGE ISOLANT DOTÉ D'UN ÉCARTEUR ET PROCEDE DE PRODUCTION D'UN TEL VITRAGE ET UTILISATION D'UN TEL VITRAGE ISOLANT COMME VITRAGE POUR UN BÂTIMENT

(30) Priorität: 27.06.2014 EP 14174745
(43) Veröffentlichungstag der Anmeldung: 03.05.2017
(73) Patentinhaber: Saint-Gobain Glass France, 92400 Courbevoie (FR)
(72) Erfinder: KUSTER, Hans-Werner, 52066 Aachen (DE); KÖTTE, Rolf, 52477 Alsdorf (DE); SCHREIBER, Walter, 52074 Aachen (DE)
(74) Vertreter: Gebauer, Dieter Edmund
(86) Internationale Anmeldenummer: PCT/EP2015/063814
(87) Internationale Veröffentlichungsnummer: WO 2015/197488

(56) Entgegenhaltungen:
- EP-A2- 2 363 565
- FR-A1- 2 205 620
- US-A1- 2014 272 207

## Beschreibung

Die Erfindung betrifft eine Isolierverglasung mit einem Abstandhalter, Verfahren zu deren Herstellung und deren Verwendung.

Die Wärmeleitfähigkeit von Glas ist etwa um den Faktor 2 bis 3 niedriger als die von Beton oder ähnlichen Baustoffen. Da Scheiben in den meisten Fällen jedoch deutlich dünner als vergleichbare Elemente aus Stein oder Beton ausgelegt sind, verlieren Gebäude dennoch häufig den größten Wärmeanteil über die Außenverglasung. Besonders deutlich wird dieser Effekt bei Hochhäusern mit teilweisen oder kompletten Glasfassaden. Die notwendigen Mehrkosten für Heizung und Klimaanlagen machen einen nicht zu unterschätzenden Teil der Unterhaltungskosten eines Gebäudes aus. Zudem werden im Zuge strengerer Bauvorschriften niedrigere Kohlendioxid Emissionen gefordert. Ein wichtiger Lösungsansatz hierfür sind Isolierverglasungen, die vor allem im Zuge immer schneller steigender Rohstoffpreise und strengeren Umweltschutzauflagen nicht mehr aus dem Gebäudebau wegzudenken sind.

Der Aufbau von Isolierverglasungen bestehend aus zwei oder mehr Scheiben ist bekannt. Isolierverglasungen werden aus mindestens zwei Scheiben gefertigt, die über mindestens einen umlaufenden Abstandhalter miteinander verbunden sind. Je nach Ausführungsform ist der als Verglasungsinnenraum bezeichnete Zwischenraum der beiden Scheiben luft- oder gasgefüllt, in jedem Fall jedoch frei von Feuchtigkeit. Ein zu hoher Gehalt an Feuchtigkeit im Verglasungsinnenraum führt besonders bei kalten Außentemperaturen zur Kondensation von Wassertropfen im Scheibenzwischenraum, was unbedingt zu vermeiden ist. Zur Aufnahme der nach der Montage im System verbleibenden Restfeuchtigkeit können beispielsweise Abstandhalter, die ein Trockenmittel enthalten, verwendet werden. Da die Aufnahmekapazität des Trockenmittels jedoch begrenzt ist, ist auch in diesem Fall die Abdichtung des Systems von enormer Wichtigkeit um das Eindringen weiterer Feuchtigkeit zu vermeiden. Bei gasgefüllten Isolierverglasungen, in deren Verglasungsinnenraum beispielsweise eine Argonfüllung eingebracht ist, muss des Weiteren auch eine Dichtigkeit gegenüber Gasen gewährleistet sein. Ein oder mehrere Schichten Dichtmittel und im Bedarfsfall Folie verhindern den Gas- und Feuchtigkeitsaustausch zwischen Scheibenzwischenraum und der Umwelt sowie tragen zur mechanischen Stabilität des Isolierglaselements bei.

Abstandhalter aus verschiedenen Materialien sind bekannt. Abstandhalter aus Materialien mit hoher Wärmeleitfähigkeit wie zum Beispiel Aluminium haben den Nachteil, dass sie bei niedrigen Außentemperaturen zu einem starken Abkühlen des Scheibenrands führen, was die Wärmedämmung verschlechtert und zur Bildung von Kondenswasser auf der Scheibe an der Gebäudeinnenseite führen kann.

Abstandhalter aus Materialien mit geringerer Wärmeleitfähigkeit werden daher bevorzugt (sogenannte "Warme-Kante"-Systeme). Abstandhalter aus polymeren Materialien haben diese verbesserten Wärme-dämmenden Eigenschaften. Es sind zum Beispiel formstabile Kunststoffprofile bekannt, die in Hohlräumen oder Aussparungen Trockenmittel oder mit Trockenmittel gefüllte Matrix enthalten. Oft müssen diese aus mehreren Komponenten bestehenden Abstandhalter in mehreren einzelnen Prozessstufen zusammengebaut werden, was die Produktion aufwendig gestaltet. Eine Möglichkeit, die Produktion zu vereinfachen, ist die einzelnen Bestandteile zu coextrudieren und so Produktionsschritte einzusparen.

Die Verwendung thermoplastischer Materialien zur Herstellung von Abstandhaltern ist bekannt, die entweder als vorgefertigtes Profil hergestellt und anschließend zwischen den Scheiben fixiert werden, oder direkt auf die Scheibe extrudiert werden. Im ersten Fall müssen in einem separaten Produktionsschritt die Scheibenkontaktflächen des Abstandhalters mit einem Klebemittel versehen werden. Die Materialeigenschaften müssen genau aufeinander abgestimmt sein, um ein Ablösen des Abstandhalters von der Scheibe zu verhindern.

In der deutschen Übersetzung DE 696 33 132 T2 des Patents EP 0 865 560 B1 ist ein Verbundabstandhalter aus zellularem Material beschrieben, der in einem Kanal Trockenmittel enthält. Der Verbundabstandhalter und das Trockenmittel können co-extrudiert werden. Die Matrix enthaltend das Trockenmittel ist dabei zum Scheibeninnenraum angeordnet und für den Endverbraucher sichtbar. Diese Matrix eignet sich nicht zur Kennzeichnung der Scheibe. Bevorzugt ist zur Abdichtung der Isolierverglasung eine separate Dampfsperre an der zur Außenkante der Verglasung weisenden Seite des Abstandhalters angebracht, da das zellulare Material bevorzugt porös ist.

Spritzbare thermoplastische Abstandhalter (TPS Spacer) aus Dichtmaterialien wie Polyisobutylen und Butylkautschuk sind bekannt, die in der Matrix Trockenmittel enthalten, sodass ein Schritt zum Befüllen von Hohlkörpern in formstabilen Abstandhaltern entfällt. Zudem wird bei diesen Abstandhaltern kein separates Dichtmittel oder Klebemittel benötigt, da der Abstandhalter selbst bereits aus einem entsprechenden Dichtmaterial besteht. Diese Abstandhalter können direkt auf die Scheibe appliziert werden. Zur Herstellung von Isolierverglasungen mit mehr als zwei Scheiben können zwei Streifen Dichtmaterial gleichzeitig auf zwei Seiten einer mittleren Scheibe in gleicher Höhe eingespritzt werden, sodass die strengen Vorgaben bei der Montage von Dreifachisolierverglasungen erfüllt werden. Diese spritzbaren thermoplastischen Abstandhalter sind dunkel gefärbt, haben eine raue Oberfläche und sind daher optisch wenig ansprechend und können zum Zweck der Scheibenkennzeichnung nicht beschriftet werden. Bei der Herstellung der spritzbaren Abstandhalter können zudem Ungenauigkeiten auftreten, die zu Unebenheiten an der Scheibenkontaktfläche führen. Diese Unebenheiten führen in der Isolierverglasung zu Spannungen und schließlich zu einem Versagen der dichten Verbindung zwischen Scheibe und Abstandhalter.

DE 25 55 384 C3 offenbart eine Zwischenschicht aus einem Kunststoffmaterial mit eingearbeitetem Trockenmittel, wobei die Zwischenschicht über den gesamten Querschnitt Trockenmittel enthält. Die Zwischenschicht dient demnach als Abstandhalter und Dichtmittel. Das enthaltene Trockenmittel verringert die Klebe-wirkung des Dichtmittels und kann dazu führen, dass die Schicht sich im Laufe der Zeit ablöst und in den sichtbaren Bereich des Scheibenzwischenraums wandert (sogenannter Girlandeneffekt). Um dieses Problem zu lösen, können Butyldichtstoffe mit reaktiven Gruppen modifiziert werden, die zu einer verbesserten Haftung am Glassubstrat führen. EP 2 420 536 A1 offenbart eine Dichtmasse bestehend aus einem Primärdichtstoff und einem Sekundärdichtstoff, wobei der Primärdichtstoff ein mit speziellen reaktiven Gruppen modifiziertes Polymer enthält und der Sekundärdichtstoff ein Dichtstoff auf Silikonbasis ist. Diese Abstandhalter sind dunkel gefärbt und optisch wenig ansprechend.

EP 0 261 923 A2 offenbart eine Mehrscheiben-Isolierverglasung mit einem Abstandhalter aus einem feuchtigkeitsdurchlässigen Schaum mit einem integrierten Trockenmittel. Der Abstandhalter wird mithilfe geeigneter Klebstoffe befestigt, was einen zusätzlichen Prozessschritt erforderlich macht. Zur Sicherstellung der Gasdichtigkeit der Anordnung wird bevorzugt eine zusätzliche beschichtete Folie auf dem Abstandhalter angebracht.

FR 2205620 A1 zeigt einen Abstandhalter, bei dem der unterschied zu Anspruch 1 ist, dass ein Klebeband zwischen einem Kunststoffprofil und einem Grundkörper angeordnet ist.

Die Aufgabe der vorliegenden Erfindung ist es, eine Isolierverglasung bereitzustellen, die die genannten Nachteile nicht aufweist und insbesondere optisch ansprechend ist, und ein wirtschaftliches Verfahren zur Herstellung einer solchen Isolierverglasung bereitzustellen.

Die Aufgabe der vorliegenden Erfindung wird erfindungsgemäß überraschend gelöst durch eine Isolierverglasung nach dem unabhängigen Anspruch 1, Verfahren zu deren Herstellung und deren Verwendung. Bevorzugte Ausführungen der Erfindung gehen aus den Unteransprüchen hervor.

Die erfindungsgemäße Isolierverglasung umfasst mindestens eine erste Scheibe, eine zweite Scheibe, einen inneren Scheibenzwischenraum, einen äußeren Scheibenzwischenraum und einen Abstandhalter. Der Abstandhalter umfasst mindestens eine Verglasungsinnenraumfläche, eine erste Scheibenkontaktfläche und eine zweite Scheibenkontaktfläche, mindestens ein Kunststoffprofil, ein primäres Dichtmittel und einen Grundkörper, wobei der Grundkörper aus einem Dichtmaterial besteht, welches ein Trockenmaterial beinhaltet. Das Kunststoffprofil ist an der Verglasungsinnenraumfläche angeordnet und trennt den äußeren Scheibenzwischenraum vom inneren Scheibenzwischenraum. Das Kunststoffprofil definiert den Abstand zwischen den anliegenden Scheiben. Da das Kunststoffprofil ohne Unebenheiten gefertigt werden kann, hat seine Verwendung Vorteile gegenüber Abstandhaltern aus ausschließlich thermoplastischen Materialien. Das Kunststoffprofil ist optisch ansprechend gestaltet und kann zum Beispiel zum Zweck der Produktkennzeichnung beschriftet werden. Der Grundkörper aus Dichtmaterial mit Trockenmittel ist im äußeren Scheibenzwischenraum unmittelbar angrenzend an das Kunststoffprofil angeordnet. Das Dichtmaterial ist eine Klebedichtmasse, d.h. es hat neben abdichtenden Eigenschaften auch klebende Eigenschaften und kann zwei Glasscheiben verkleben. Aufgrund dieser Eigenschaften kann der Grundkörper auch das Kunststoffprofil dauerhaft in Position fixieren. Er beinhaltet zudem das Trockenmittel zur Bindung eventuell vorhandener Feuchtigkeit im inneren Scheibenzwischenraum. Unmittelbar angrenzend an den Grundkörper ist im äußeren Scheibenzwischenraum das primäre Dichtmittel angeordnet, das den vom umlaufenden Abstandhalter und den Scheiben eingeschlossenen Verglasungsinnenraum gegen Gasaustausch und Eindringen von Feuchtigkeit versiegelt.

Die erste Scheibenkontaktfläche und die zweite Scheibenkontaktfläche stellen die Seiten des Abstandhalters dar, an denen nach Einbau des Abstandhalters die äußeren

Scheiben (erste Scheibe und zweite Scheibe) einer Isolierverglasung anliegen. Die erste Scheibenkontaktfläche und die zweite Scheibenkontaktfläche verlaufen parallel zueinander.

Die Verglasungsinnenraumfläche ist als die Fläche des Abstandhalters definiert, die nach Einbau des Abstandhalters in einer Isolierverglasung in Richtung des Innenraums der Verglasung weist. Das Kunststoffprofil ist an der Verglasungsinnenraumfläche angeordnet.

In einer ersten bevorzugten Ausführungsform umfasst die Isolierverglasung eine zwischen der ersten Scheibe und der zweiten Scheibe angeordnete dritte Scheibe, eine Verglasungsinnenraumfläche umfassend eine erste Verglasungsinnenraumfläche und eine zweite Verglasungsinnenraumfläche. Die erste Verglasungsinnenraumfläche ist dabei zwischen der ersten und der dritten Scheibe, und die zweite Verglasungsinnenraumfläche zwischen der dritten und der zweiten Scheibe angeordnet. Das Kunststoffprofil ist in diesem Fall zweigeteilt und umfasst ein erstes Kunststoffprofil an der ersten Verglasungsinnenraumfläche zwischen der ersten Scheibe und der dritten Scheibe und ein zweites Kunststoffprofil an der zweiten Verglasungsinnenraumfläche zwischen der dritten Scheibe und der zweiten Scheibe. Der Grundkörper ist im äußeren Scheibenzwischenraum zwischen der ersten und der zweiten Scheibe angeordnet und die dritte Scheibe ragt zwischen dem ersten und dem zweiten Kunststoffprofil in den Grundkörper hinein. Die dritte Scheibe ragt dabei bevorzugt nicht in das primäre Dichtmittel hinein. Durch die Verwendung von einfach herzustellenden Kunststoffprofilen mit veränderbarer Breite lassen sich leicht Variationen der Scheibendicke und des Scheibenabstands verwirklichen. Die Abmessungen des Grundkörpers aus Dichtmaterial können ebenfalls einfach variiert werden.

In einer weiteren bevorzugten Ausführungsform ist das primäre Dichtmittel im äußeren Scheibenzwischenraum angrenzend an den Grundkörper und an den Scheibenkontaktflächen zwischen Grundkörper und äußeren Scheiben (erste und zweite Scheibe) angeordnet. In dieser Anordnung ist der Grundkörper an drei Seiten von primärem Dichtmittel umgeben und zum inneren Scheibenzwischenraum durch das Kunststoffprofil begrenzt, d.h. die erste und zweite Scheibenkontaktfläche umfasst das Kunststoffprofil und das primäre Dichtmittel, aber nicht den Grundkörper. Das primäre Dichtmittel hat bessere Hafteigenschaften als das Material des Grundkörpers, das zusätzlich zum Dichtmaterial auch Trockenmittel enthält. Durch die Anordnung des primären Dichtmittels zusätzlich an den Scheibenkontaktflächen werden die Dichtigkeit und die Stabilität der Anordnung verbessert.

In einer bevorzugten Ausführungsform sind der Grundkörper und das primäre Dichtmittel einteilig ausgeführt, bevorzugt co-extrudiert. Durch die Co-Extrusion entsteht ein besonders fester Verbund zwischen den einzelnen Bestandteilen ohne den Einsatz zusätzlicher Haftmittel.

In einer bevorzugten Ausführungsform ist im äußeren Scheibenzwischenraum angrenzend an das primäre Dichtmittel ein sekundäres Dichtmittel eingebracht, das den äußeren Scheibenzwischenraum in seiner gesamten Breite zwischen der ersten Scheibe und der zweiten Scheibe ausfüllt. Dieses sekundäre Dichtmittel bewirkt eine Verklebung der ersten und der zweiten Scheibe und gewährleistet somit eine ausreichende mechanische Stabilität der Isolierverglasung. Das sekundäre Dichtmittel enthält bevorzugt ein Polymer oder silanmodifiziertes Polymer, besonders bevorzugt organische Polysulfide, Silikone, raumtemperaturvernetzenden Silikonkautschuk, hochtemperaturvernetzenden Silikonkautschuk, peroxidisch-vernetzten Silikonkautschuk und/oder additions-vernetzten-Silikonkautschuk, Polyurethane und/oder Butylkautschuk. Derartige Stoffe haben eine sehr gute Haftung auf Glas, sodass das sekundäre Dichtmittel vor allem der Verklebung der Scheiben dient und zur mechanischen Stabilität der Isolierverglasung beiträgt.

In einer bevorzugten Ausführungsform einer Isolierverglasung mit mindestens einer dritten Scheibe ragt diese dritte Scheibe nur zu einem Teil in den Grundkörper hinein, das heißt die dritte Scheibe teilt den Grundkörper nicht in zwei einzelne Grundköper. Bevorzugt ragt die Scheibe über eine Strecke von 20 % bis 80 %, besonders bevorzugt 30 % bis 60 %, der Gesamthöhe des Grundkörpers in den Grundkörper hinein und kommt daher nicht in Kontakt mit dem primären Dichtmittel. Diese Anordnung verbessert die Dichtigkeit gegenüber einer Anordnung, bei der die dritte Scheibe sich über die gesamte Höhe des Grundkörpers erstreckt.

In einer weiteren bevorzugten Ausführungsform einer Isolierverglasung mit mindestens einer dritten Scheibe ragt diese dritte Scheibe über die gesamte Länge des Grundkörpers in den Grundkörper hinein. In einer alternativen Ausführungsform ragt die dritte Scheibe durch den Grundkörper und durch das primäre Dichtmittel hindurch, aber nicht in das sekundäre Dichtmittel hinein.
In einer weiteren alternativen Ausführungsform ragt die dritte Scheibe durch den Grundkörper, das primäre Dichtmittel und das sekundäre Dichtmittel hindurch.

In einer bevorzugten Ausführung enthält das Kunststoffprofil an der Verglasungsinnenraumfläche mindestens eine Öffnung, bevorzugt mehrere Öffnungen, die den Gas- und Feuchtigkeitsaustausch zwischen dem Grundkörper und dem inneren Scheibenzwischenraum ermöglichen. Dadurch wird die Aufnahme von Feuchtigkeit durch das Trockenmittel, das in dem Grundkörper enthalten ist, erlaubt.

Der Grundkörper enthält bevorzugt ein Dichtmaterial aus der Gruppe der Hotmelt-Klebstoffe, bevorzugt aus der der Butyl-basierten Hotmelt-Klebstoffe, bevorzugt Butylkautschuk und/oder Polyisobutylen und ein Trockenmittel, das bevorzugt Kieselgele, Molekularsiebe, CaCl₂, Na₂SO₄, Aktivkohle, Silikate, Bentonite, Zeolithe und/oder Gemische davon enthält. Weitere geeignete Kombinationen aus Dichtmittel und Trockenmittel sind dem Fachmann aus Anwendungen für thermoplastische Abstandhalter (TPS) bekannt.

Das Kunststoffprofil enthält bevorzugt Polyethylen (PE), Polycarbonate (PC), Polypropylen (PP), Polystyrol, Polybutadien, Polynitrile, Polyester, Polyurethane, Polymethylmetacrylate, Polyacrylate, Polyamide, Polyethylenterephthalat (PET), Polybutylenterephthalat (PBT), Acrylnitril-Butadien-Styrol (ABS), Acrylester-Styrol-Acrylnitril (ASA), Acrylnitril-Butadien-Styrol / Polycarbonat (ABS/PC), Styrol-Acrylnitril (SAN), PET/PC, PBT/PC und/oder Copolymere oder Gemische davon. Das Kunststoffprofil kann optional auch weitere Bestandteile, wie beispielsweise Glasfasern, enthalten.

Das primäre Dichtmittel enthält bevorzugt Butylkautschuk, Polyisobutylen, Polyolefin-Kautschuk, Copolymere und/oder Gemische davon.

Der Scheibenzwischenraum der Isolierverglasung ist bevorzugt mit einem inerten Gas, bevorzugt mit einem Edelgas, vorzugsweise Argon oder Krypton gefüllt, die den Wärmeübergangswert im Scheibenzwischenraum reduzieren.

Die erste Scheibe und/oder die zweite Scheibe enthalten Glas und/oder Polymere, bevorzugt Quarzglas, Borosilikatglas, Kalk-Natron-Glas, Polymethylmethacrylat und/oder Gemische davon. Über die zweite Scheibe hinausgehende weitere Scheiben umfassen ebenfalls diese Materialien.

Die Scheiben verfügen über eine Dicke von 1 mm bis 50 mm, bevorzugt 3 mm bis 16 mm, besonders bevorzugt 3 mm bis 10 mm, wobei die Scheiben auch unterschiedliche Dicken haben können. Eine Variation der Dicken der Scheiben verbessert den Schallschutz (asymmetrischer Aufbau).

Die Erfindung umfasst ferner ein Verfahren zur Herstellung einer Isolierverglasung nach Anspruch 1 enthaltend zwei Scheiben. In einem ersten Schritt wird ein Abstandhalter bereitgestellt, indem ein Grundkörper enthaltend ein Dichtmaterial mit Trockenmittel und ein primäres Dichtmittel auf einem Kunststoffprofil co-extrudiert werden. Dieser fertige Abstandhalter wird zwischen zwei Scheiben angebracht, indem eine erste Scheibe an einer ersten Scheibenkontaktfläche und eine zweite Scheibe an einer zweiten Scheibenkontaktfläche angebracht werden. Dabei wird der Abstandhalter so angeordnet, dass das Kunststoffprofil an der Verglasungsinnenraumfläche, d.h. zum inneren Scheibenzwischenraum weisend, angeordnet wird. Im letzten Schritt wird die hergestellte Scheibenanordnung aus erster und zweiter Scheibe und Abstandhalter verpresst, wodurch eine stabile Klebeverbindung hergestellt wird.

Alternativ kann die gleiche Isolierverglasung enthaltend zwei Scheiben hergestellt werden, indem die Co-Extrusion von Grundkörper und primärem Dichtmittel direkt auf der ersten Scheibe erfolgt, und gleichzeitig das Kunststoffprofil so angeordnet wird, dass es in der zusammengebauten Isolierverglasung die Verglasungsinnenraumfläche enthält. Die erste Scheibenkontaktfläche des Abstandhalters liegt nach diesem Schritt an der ersten Scheibe an. Im nachfolgenden Schritt wird eine zweite Scheibe an einer zweiten Scheibenkontaktfläche angebracht und die Scheibenanordnung aus den beiden Scheiben und dem dazwischen angeordneten Abstandhalter aus Kunststoffprofil, Grundkörper und primärem Dichtmittel verpresst, wodurch eine stabile Klebeverbindung erzeugt wird.

In einer weiteren vorteilhaften Ausführungsform des erfindungsgemäßen Verfahrens zur Herstellung einer Isolierverglasung enthaltend zwei Scheiben erfolgt die Co-Extrusion auf ein Kunststoffprofil direkt in den Zwischenraum zwischen erster Scheibe und parallel dazu angeordneter zweiter Scheibe. Dabei werden der Grundkörper und das primäre Dichtmittel auf das Kunststoffprofil co-extrudiert. Die Anordnung des Kunststoffprofils und die Co-Extrusion erfolgen gleichzeitig.

Die Erfindung umfasst ferner ein Verfahren zur Herstellung einer erfindungsgemäßen Isolierverglasung nach den Ansprüchen 2 bis 10 umfassend die Schritte:
- Anordnung einer dritten Scheibe zwischen mindestens einem ersten Kunststoffprofil und einem zweiten Kunststoffprofil,
- Co-Extrusion eines primären Dichtmittels und eines Grundkörpers enthaltend ein Dichtmaterial mit Trockenmittel auf das Kunststoffprofil, das das erste Kunststoffprofil und das zweite Kunststoffprofil umfasst und
- Verpressen einer Scheibenanordnung aus mindestens einer ersten Scheibe, einer zweiten Scheibe, der dritten Scheibe, dem Kunststoffprofil, dem Grundkörper und dem primären Dichtmittel.

In einer ersten vorteilhaften Ausführungsform des Verfahrens zur Herstellung einer erfindungsgemäßen Isolierverglasung nach einem der Ansprüche 2 bis 10 wird zunächst ein erstes Kunststoffprofil zwischen einer ersten Scheibe und einer dritten Scheibe angeordnet und ein zweites Kunststoffprofil auf gleicher Höhe zwischen der dritten Scheibe und einer zweiten Scheibe angeordnet. Dies kann zum Beispiel erfolgen, indem eine dritte Scheibe zwischen einem ersten Kunststoffprofil und einem zweiten Kunststoffprofil eingesetzt wird, wobei die Kunststoffprofile mithilfe eines Haftmittels, wie zum Beispiel Acryl-Klebeband, auf der dritten Scheibe in gleicher Höhe fixiert werden können. Die erste Scheibe wird dann angrenzend an das erste Kunststoffprofil angebracht und die zweite Scheibe angrenzend an das zweite Kunststoffprofil angebracht. Auf das zweigeteilte Kunststoffprofil enthaltend das erste und zweite Kunststoffprofil werden im folgenden Schritt ein primäres Dichtmittel und ein Grundkörper enthaltend ein Trockenmittel im äußeren Scheibenzwischenraum co-extrudiert. Dabei wird der Teil der dritten Scheibe, die in den äußeren Scheibenzwischenraum ragt, bevorzugt vom Grundkörper umschlossen.

In einer zweiten vorteilhaften Ausführungsform des erfindungsgemäßen Verfahrens zur Herstellung einer Isolierverglasung nach einem der Ansprüche 2 bis 10 wird zunächst ein Grundkörper beinhaltend ein Trockenmittel um eine dritte Scheibe herum zusammen mit einem primären Dichtmittel co-extrudiert. Gleichzeitig werden ein erstes Kunststoffprofil an einer ersten Verglasungsinnenraumfläche und ein zweites Kunststoffprofil an einer zweiten Verglasungsinnenraumfläche angeordnet, sodass das Kunststoffprofil direkt an den Grundkörper angrenzt. Dazu kann zum Beispiel eine Extrusionsdüse, die entlang der Kante der dritten Scheibe bewegt wird, mit einer Applikationsvorrichtung kombiniert werden, die das Kunststoffprofil gleichzeitig an der dritten Scheibe anbringt. Das Kunststoffprofil ist semiflexibel und wird als Rollenware zur Verfügung gestellt. Die Applikationsgeschwindigkeit des Kunststoffprofils ist variabel und kann an Ecken oder Kurven an die Extrusionsgeschwindigkeit angepasst werden. Je nach der Flexibilität des verwendeten Kunststoffprofils kann das Profil an den Kurven oder Ecken der Scheibe gebogen werden. Alternativ können Unterbrechungen des Kunststoffprofils mithilfe einer Schneidevorrichtung eingeführt werden. Da der Grundkörper aus Dichtmaterial und das primäre Dichtmittel umlaufend angebracht werden, erzeugen derartige Unterbrechungen des Kunststoffprofils keine Probleme bei der Abdichtung der Scheibenanordnung. Die so vorbereitete dritte Scheibe kann nun auf einer klassischen dem Fachmann bekannten Doppelverglasungsanlage verarbeitet werden. Dabei wird eine Scheibenanordnung aus einer ersten Scheibe, einer zweiten Scheibe und der vorbereiteten dritten Scheibe mit Abstandhalter verpresst. Die kostspielige Installation zusätzlicher Anlagenkomponenten oder ein Zeitverlust bei Mehrfachdurchlauf einer Anlage, wie bei der Montage mehrerer einzelner Abstandhalter nach dem Stand der Technik, können somit vermieden werden. Dies ist besonders vorteilhaft hinsichtlich eines Produktivitätsgewinns und einer Kostensenkung.

Bevorzugt wird der innere Scheibenzwischenraum der Scheibenanordnung mit einem Schutzgas gefüllt.

Die Erfindung umfasst des Weiteren die Verwendung einer erfindungsgemäßen Isolierverglasung als Gebäudeinnenverglasung, Gebäudeaußenverglasung und/oder Fassadenverglasung.

Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein.

Es zeigen:
- Figur 1a und 1b:: eine schematische Darstellung der erfindungsgemäßen Isolierverglasung,
- Figur 2:: eine mögliche Ausführungsform der erfindungsgemäßen Isolierverglasung,
- Figur 3:: eine mögliche Ausführungsform der erfindungsgemäßen Isolierverglasung,
- Figur 4:: ein Flussdiagramm einer möglichen Ausführungsform eines erfindungsgemäßen Verfahrens zur Herstellung einer Isolierverglasung mit drei Scheiben,
- Figur 5:: ein Flussdiagramm einer möglichen Ausführungsform eines erfindungsgemäßen Verfahrens zur Herstellung einer Isolierverglasung mit drei Scheiben.

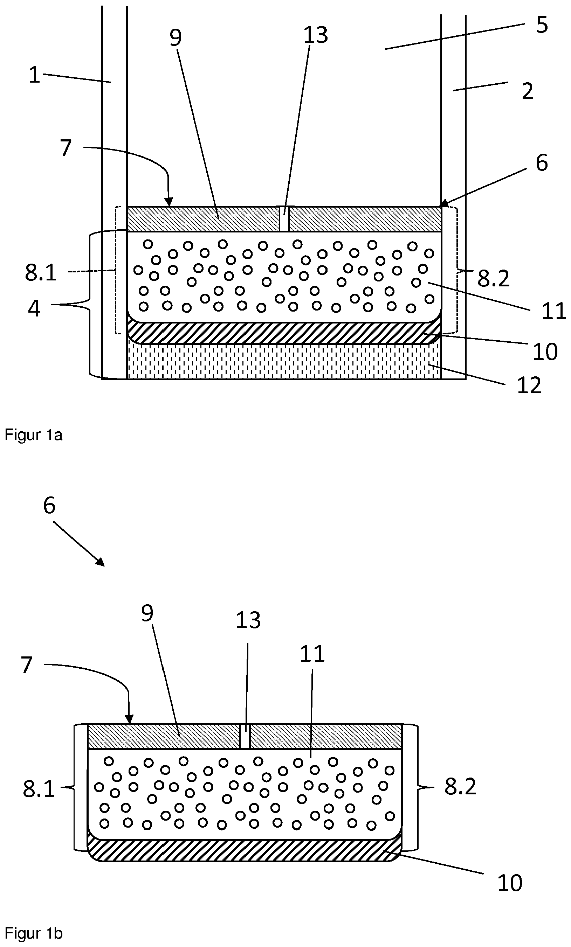

Figur 1a und 1b zeigen eine schematische Darstellung des Randbereichs einer erfindungsgemäßen Isolierverglasung im Querschnitt. Zwischen einer ersten Scheibe 1 und einer parallel dazu angeordneten zweiten Scheibe 2 ist ein umlaufender Abstandhalter 6 angebracht, der aus einem Kunststoffprofil 9, einem Grundkörper 11 und einem primären Dichtmittel 10 besteht. Der Grundkörper 11 enthält ein Dichtmaterial mit Trockenmittel, wie zum Beispiel Butyl mit Molsieb. Das Trockenmittel wird in der Figur durch Kreise angedeutet. Der an die Verglasungsinnenraumfläche 7 des Abstandhalters 6 angrenzende innere Scheibenzwischenraum 5 wird als der von den Scheiben 1,2 begrenzte Raum definiert. Das Kunststoffprofil 9 trennt den inneren Scheibenzwischenraum 5 vom äußeren Scheibenzwischenraum 4. Das Kunststoffprofil 9 enthält an der Verglasungsinnenraumfläche 7 Öffnungen 13, um eine Verbindung zwischen dem inneren Scheibenzwischenraum 5 und dem Grundkörper 11 herzustellen, um den Gasaustausch zu ermöglichen und die Aufnahme von Feuchtigkeit durch das Trockenmittel zu erlauben. Im äußeren Scheibenzwischenraum 4 ist an den Grundkörper 11 angrenzend ein primäres Dichtmittel 10 angebracht, das aus demselben Material wie der Grundkörper 11 bestehen kann. An das primäre Dichtmittel 10 angrenzend ist ein sekundäres Dichtmittel 12, wie zum Beispiel ein organisches Polysulfid, im äußeren Scheibenzwischenraum 4 angebracht, das zur Verklebung der beiden Scheiben 1,2 dient und die mechanische Stabilität der Isolierverglasung erhöht. Die erste Scheibenkontaktfläche 8.1 und die zweite Scheibenkontaktfläche 8.2 werden vom Kunststoffprofil 9, dem Grundkörper 11 und dem primären Dichtmittel 10 gebildet.

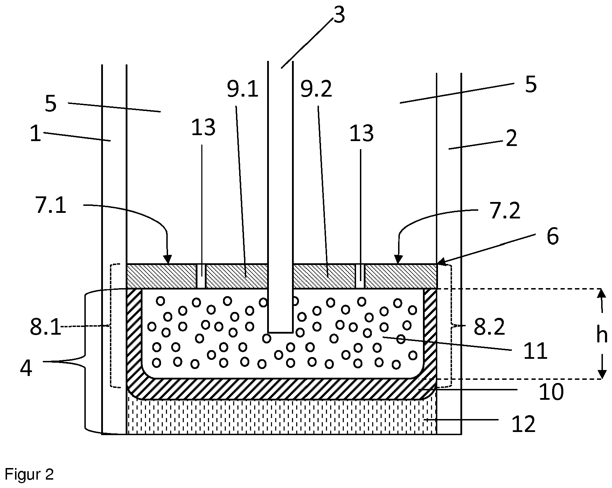

Figur 2 zeigt eine mögliche Ausführungsform der erfindungsgemäßen Isolierverglasung. Der Aufbau entspricht in den Grundzügen dem in Figur 1a, b gezeigten Schema. Zwischen einer ersten Scheibe 1 und einer zweiten Scheibe 2 ist eine dritte Scheibe 3 angeordnet. Das Kunststoffprofil 9 umfasst ein erstes Kunststoffprofil 9.1 an der ersten Verglasungsinnenraumfläche 7.1 und ein zweites Kunststoffprofil 9.2 an der zweiten Verglasungsinnenraumfläche 7.2, zwischen denen die dritte Scheibe 3 angeordnet ist. Die dritte Scheibe 3 ragt in den Grundkörper 11 hinein und ragt dabei nur zu etwa 50 % der Gesamthöhe h des Grundkörpers 11 in den Grundkörper 11 hinein. Das formstabile Kunststoffprofil 9 fixiert die Abstände zwischen erster Scheibe 1 und dritter Scheibe 3 sowie zwischen dritter Scheibe 3 und zweiter Scheibe 2. Das erste Kunststoffprofil 9.1 und das zweite Kunststoffprofil 9.2 enthalten Öffnungen 13 an den Verglasungsinnenraumflächen 7.1 und 7.2. Der Grundkörper 11 enthält als Dichtmittel Butyl und als Trockenmittel ein Molsieb. Das primäre Dichtmittel 10, das reines Butyl enthält, ist angrenzend an den Grundkörper 11 angeordnet, wobei das primäre Dichtmittel 10 einen Teil der ersten Scheibenkontaktfläche 8.1 und der zweiten Scheibenkontaktfläche 8.2 bildet und so den Grundkörper 11 an drei Seiten einschließt. In dieser Anordnung ist die Verklebung der Scheiben 1 und 2 verbessert, weil reines Butyl im Vergleich zu Butyl enthaltend Trockenmittel bessere Klebeeigenschaften hat, was zu einer verbesserten Abdichtung des Systems beiträgt. Im äußeren Scheibenzwischenraum 4 ist zwischen der ersten Scheibe 1 und der zweiten Scheibe 2 als sekundäres Dichtmittel 12 Polysulfid angrenzend an das primäre Dichtmittel 10 angeordnet. Das sekundäre Dichtmittel 12 stellt die Verklebung der ersten Scheibe 1 und der zweiten Scheibe 2 sicher und trägt zur mechanischen Stabilität der gesamten Isolierverglasung bei.

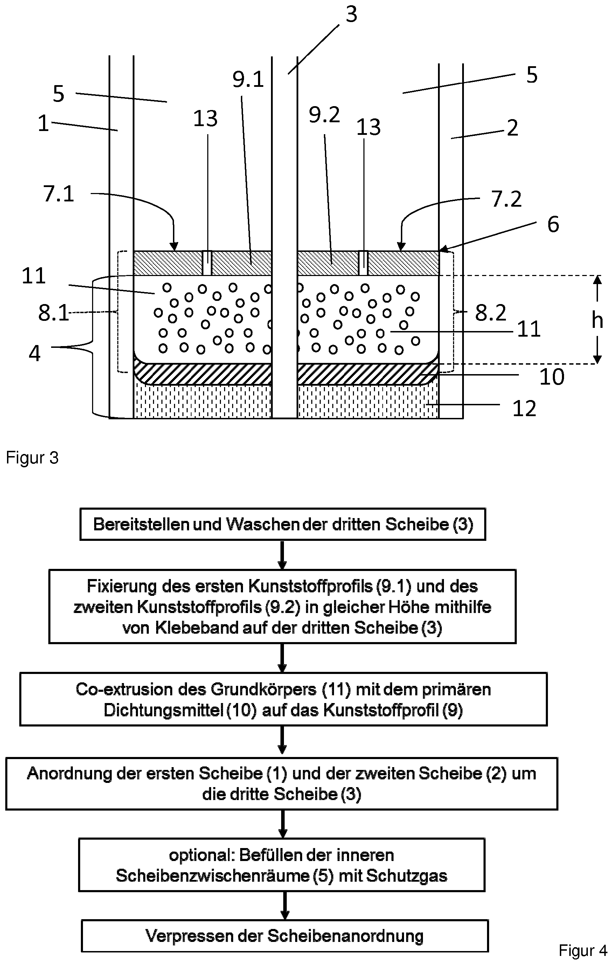

Figur 3 zeigt eine mögliche Ausführungsform der erfindungsgemäßen Isolierverglasung. Der Aufbau entspricht in den Grundzügen dem in Figur 2 gezeigten Schema. Die dritte Scheibe 3 ragt über die gesamte Höhe h des Grundkörpers 11 in den Grundkörper 11 hinein. Der Grundkörper 11 wird somit zweigeteilt und grenzt im äußeren Scheibenzwischenraum 4 zwischen erster Scheibe 1 und dritter Scheibe 3 an das erste Kunststoffprofil 9.1 und zwischen dritter Scheibe 3 und zweiter Scheibe 2 an das zweite Kunststoffprofil 9.2 an. Im äußeren Scheibenzwischenraum 4 ist angrenzend an den Grundkörper 11 ein primäres Dichtmittel 10 und ein sekundäres Dichtmittel 12 angeordnet. Die dritte Scheibe 3 ragt durch den Grundkörper 11 und durch das primäre Dichtmittel 10 und das sekundäre Dichtmittel 12 hindurch.

Figur 4 zeigt ein Flussdiagramm eines Verfahrens zur Herstellung einer Isolierverglasung umfassend drei Scheiben. Nach der Bereitstellung und dem Waschen der dritten Scheibe 3 werden zwei Kunststoffprofile 9.1 und 9.2 in gleicher Höhe an der dritten Scheibe 3 befestigt. Die Befestigung kann zum Beispiel mit Hilfe eines doppelseitigen Klebebands erfolgen, das an den Seiten der Kunststoffprofile 9.1 und 9.2 angebracht ist. Anschließend erfolgt die Co-Extrusion von Grundkörper 11 und primärem Dichtmittel 10 auf das Kunststoffprofil 9 umfassend 9.1 und 9.2, sodass die dritte Scheibe 3 in den Grundkörper 11 hineinragt und die dritte Scheibe 3 mit einem umlaufenden Abstandhalter 6 aus Kunststoffprofilen (9.1, 9.2), Grundkörper 11 und primärem Dichtmittel 10 versehen ist. Dieses vormontierte Bauteil kann nun auf einer klassischen dem Fachmann bekannten Doppelverglasungsanlage verarbeitet werden, wobei die beiden äußeren Scheiben 1 und 2 an den Scheibenkontaktflächen 8.1 und 8.2 des Abstandhalters 6 angebracht werden. Optional kann der innere Scheibenzwischenraum 5 mit Schutzgas befüllt werden. Im letzten Schritt wird die Scheibenanordnung aus erster Scheibe 1, zweiter Scheibe 2, dritter Scheibe 3 und Abstandhalter 6 verpresst.

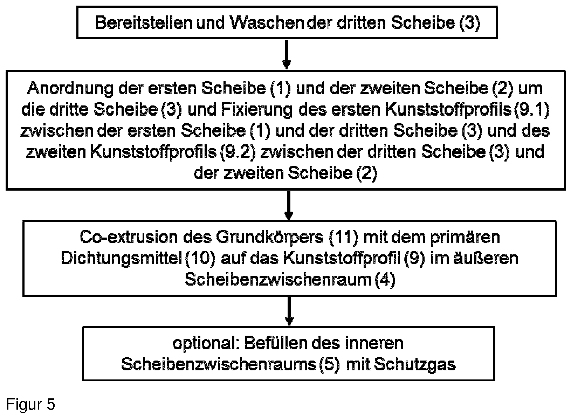

Figur 5 zeigt ein Flussdiagramm eines alternativen Verfahrens zur Herstellung einer Isolierverglasung umfassend drei Scheiben. Nach der Vorbereitung der dritten Scheibe 3 wird diese zwischen der ersten Scheibe 1 und zweiten Scheibe 2 angeordnet. Zwischen der ersten Scheibe 1 und der dritten Scheibe 3 wird das erste Kunststoffprofil 9.1 fixiert und zwischen der dritten Scheibe 3 und der zweiten Scheibe 2 wird das zweite Kunststoffprofil 9.2 fixiert. Anschließend wird der Grundkörper 11 mit dem primären Dichtmittel 10 auf das Kunststoffprofil umfassend das erste Kunststoffprofil 9.1 und das zweite Kunststoffprofil 9.2 im äußeren Scheibenzwischenraum 4 co-extrudiert.

### Bezugszeichenliste

- 1: erste Scheibe
- 2: zweite Scheibe
- 3: dritte Scheibe
- 4: äußerer Scheibenzwischenraum
- 5: innerer Scheibenzwischenraum
- 6: Abstandhalter
- 7: Verglasungsinnenraumfläche
- 7.1: erste Verglasungsinnenraumfläche
- 7.2: zweite Verglasungsinnenraumfläche
- 8.1: erste Scheibenkontaktfläche
- 8.2: zweite Scheibenkontaktfläche
- 9: Kunststoffprofil
- 9.1: erstes Kunststoffprofil
- 9.2: zweites Kunststoffprofil
- 10: primäres Dichtmittel
- 11: Grundkörper
- 12: sekundäres Dichtmittel
- 13: Öffnungen

## Patentansprüche

1. Isolierverglasung mindestens umfassend eine erste Scheibe (1), eine zweite Scheibe (2), einen äußeren Scheibenzwischenraum (4), einen inneren Scheibenzwischenraum (5) und einen Abstandhalter (6) mit einer Verglasungsinnenraumfläche (7), einer ersten Scheibenkontaktfläche (8.1) und einer zweiten Scheibenkontaktfläche (8.2), einem Kunststoffprofil (9), einem primären Dichtmittel (10) und einem Grundkörper (11) enthaltend mindestens ein Dichtmaterial beinhaltend ein Trockenmaterial, wobei
- das Kunststoffprofil (9) den äußeren Scheibenzwischenraum (4) vom inneren Scheibenzwischenraum (5) trennt,
- der Grundkörper (11) im äußeren Scheibenzwischenraum (4) unmittelbar angrenzend an das Kunststoffprofil (9) und das primäre Dichtmittel (10) im äußeren Scheibenzwischenraum (4) unmittelbar angrenzend an den Grundkörper (11) angeordnet ist.

2. Isolierverglasung nach Anspruch 1, mindestens umfassend eine zwischen der ersten Scheibe (1) und der zweiten Scheibe (2) angeordnete dritte Scheibe (3), wobei die Verglasungsinnenraumfläche (7) mindestens eine erste Verglasungsinnenraumfläche (7.1) und eine zweite Verglasungsinnenraumfläche (7.2) umfasst,
- das Kunststoffprofil (9) ein erstes Kunststoffprofil (9.1) an der ersten Verglasungsinnenraumfläche (7.1) zwischen der ersten Scheibe (1) und der dritten Scheibe (3) und ein zweites Kunststoffprofil (9.2) an der zweiten Verglasungsinnenraumfläche (7.2) zwischen der dritten Scheibe (3) und der zweiten Scheibe (2) umfasst,
- der Grundkörper (11) zwischen der ersten Scheibe (1) und der zweiten Scheibe (2) angeordnet ist und
- die dritte Scheibe (3) zwischen dem ersten Kunststoffprofil (9.1) und dem zweiten Kunststoffprofil (9.2) in den Grundkörper (11) hereinragt.

3. Isolierverglasung nach einem der Ansprüche 1 oder 2, wobei
- die erste Scheibenkontaktfläche (8.1) und die zweite Scheibenkontaktfläche (8.2) das Kunststoffprofil (9) und das primäre Dichtmittel (10) umfasst und
- das primäre Dichtmittel (10) den Grundkörper (11) an drei Seiten umschließt.

4. Isolierverglasung nach einem der Ansprüche 1 bis 3, wobei das Kunststoffprofil (9) mindestens eine Öffnung (13), bevorzugt mehrere Öffnungen (13) aufweist, die den Gas- und Feuchtigkeitsaustausch zwischen dem Grundkörper (11) und dem inneren Scheibenzwischenraum (5) ermöglichen.

5. Isolierverglasung nach einem der Ansprüche 1 bis 4, wobei zwischen der ersten Scheibe (1) und der zweiten Scheibe (2) im äußeren Scheibenzwischenraum (4) anschließend an das primäre Dichtmittel (10) ein sekundäres Dichtmittel (12) angeordnet ist, das bevorzugt ein Polymer oder silanmodifiziertes Polymer, besonders bevorzugt organische Polysulfide, Silikone, raumtemperaturvernetzenden Silikonkautschuk, hochtemperaturvernetzenden Silikonkautschuk, peroxidischvernetzten Silikonkautschuk und/oder additions-vernetzten-Silikonkautschuk, Polyurethane und/oder Butylkautschuk, umfasst.

6. Isolierverglasung nach einem der Ansprüche 2 bis 5, wobei die dritte Scheibe (3) nur zu einem Teil in den Grundkörper (11) hereinragt, bevorzugt zu 20 % bis 80 %, besonders bevorzugt 30 % bis 60 % der Gesamthöhe des Grundkörpers (11) in den Grundkörper hereinragt.

7. Isolierverglasung nach einem der Ansprüche 2 bis 5, wobei die dritte Scheibe (3) über die gesamte Höhe des Grundkörpers (11) in den Grundkörper (11) hineinragt und/oder die dritte Scheibe (3) durch das primäre Dichtmittel (10) hindurchragt.

8. Isolierverglasung nach Anspruch 7, wobei die dritte Scheibe durch das sekundäre Dichtmittel (12) hindurchragt.

9. Isolierverglasung nach einem der Ansprüche 1 bis 8, wobei der Grundkörper (11) mindestens ein Dichtmaterial, bevorzugt einen Hotmelt-Klebstoff, Polyisobutylen und/oder Butylkautschuk und ein Trockenmittel, bevorzugt Kieselgele, Molekularsiebe, CaCl₂, Na₂SO₄, Aktivkohle, Silikate, Bentonite, Zeolithe und/oder Gemische davon enthält.

10. Isolierverglasung nach einem der Ansprüche 1 bis 9, wobei das Kunststoffprofil (9) Polyethylen (PE), Polycarbonate (PC), Polypropylen (PP), Polystyrol, Polybutadien, Polynitrile, Polyester, Polyurethane, Polymethylmetacrylate, Polyacrylate, Polyamide, Polyethylenterephthalat (PET), Polybutylenterephthalat (PBT), Acrylnitril-Butadien-Styrol (ABS), Acrylester-Styrol-Acrylnitril (ASA), Acrylnitril-Butadien-Styrol/Polycarbonat (ABS/PC), Styrol-Acrylnitril (SAN), PET/PC, PBT/PC und/oder Copolymere oder Gemische davon enthält.

11. Isolierverglasung nach einem der Ansprüche 1 bis 10, wobei das primäre Dichtmittel (10) Butylkautschuk, Polyisobutylen, Polyolefin-Kautschuk, Copolymere und/oder Gemische davon enthält.

12. Verfahren zur Herstellung einer Isolierverglasung nach Anspruch 1 enthaltend eine erste Scheibe (1) und eine zweite Scheibe (2), wobei zumindest
a) ein Abstandhalter (6) bereitgestellt wird, indem ein Grundkörper (11) enthaltend ein Dichtmaterial beinhaltend ein Trockenmittel und ein primäres Dichtmittel (10) auf einem Kunststoffprofil (9) co-extrudiert werden,
b) eine erste Scheibe (1) an einer ersten Scheibenkontaktfläche (8.1) des Abstandhalters (6) und eine zweite Scheibe (2) an einer zweiten Scheibenkontaktfläche (8.2) angebracht werden sodass das Kunststoffprofil (9) an der Verglasungsinnenraumfläche (7) angeordnet ist und
c) die Scheibenanordnung aus den Scheiben (1,2) und dem Abstandhalter (6) miteinander verpresst wird, wodurch eine stabile Klebeverbindung erzeugt wird.

13. Verfahren zur Herstellung einer Isolierverglasung nach einem der Ansprüche 2 bis 11, wobei zumindest
a) ein erstes Kunststoffprofil (9.1) zwischen einer ersten Scheibe (1) und einer dritten Scheibe (3) und ein zweites Kunststoffprofil (9.2) auf gleicher Höhe zwischen der dritten Scheibe (3) und einer zweiten Scheibe (2) angeordnet wird
b) ein primäres Dichtmittel (10) und ein Grundkörper (11) enthaltend ein Dichtmaterial mit Trockenmittel auf das Kunststoffprofil (9), umfassend das erste Kunststoffprofil (9.1) und das zweite Kunststoffprofil (9.2), im äußeren Scheibenzwischenraum (4) co-extrudiert werden.

14. Verfahren zur Herstellung einer Isolierverglasung nach einem der Ansprüche 2 bis 11, wobei zumindest
a) ein Grundkörper (11) beinhaltend ein Trockenmittel um mindestens eine dritte Scheibe (3) herum zusammen mit einem primären Dichtmittel (10) co-extrudiert wird, und gleichzeitig mindestens ein erstes Kunststoffprofil (9.1) an einer ersten Verglasungsinnenraumfläche (7.1) und ein zweites Kunststoffprofil (9.2) an einer zweiten Verglasungsinnenraumfläche (7.2) direkt angrenzend an den Grundkörper (11) angebracht werden,
b) eine erste Scheibe (1) und eine zweite Scheibe (2) an den Scheibenkontaktflächen (8.1, 8.2) des Abstandhalters (6) umfassend Kunststoffprofil (9), Grundkörper (11) und primärem Dichtmittel (10) angebracht werden und
c) die Scheibenanordnung aus mindestens der ersten Scheibe (1), der zweiten Scheibe (2), der dritten Scheibe (3) und dem Abstandhalter (6) miteinander verpresst wird, wodurch eine stabile Klebeverbindung erzeugt wird.

15. Verwendung einer Isolierverglasung nach einem der Ansprüche 1 bis 11 als Gebäudeinnenverglasung, Gebäudeaußenverglasung und/oder Fassadenverglasung.

## Claims

1. Insulating glazing at least comprising a first pane (1), a second pane (2), an outer pane interspace (4), an inner pane interspace (5), and a spacer (6) with a glazing interior surface (7), a first pane contact surface (8.1) and a second pane contact surface (8.2), a plastic profile (9), a primary sealing means (10), and a main member (11) containing at least one sealing material containing a drying material, wherein
- the plastic profile (9) separates the outer pane interspace (4) from the inner pane interspace (5),
- the main member (11) is arranged in the outer pane interspace (4) directly adjacent the plastic profile (9) and the primary sealing means (10) is arranged in the outer pane interspace (4) directly adjacent the main member (11).

2. Insulating glazing according to claim 1, at least comprising a third pane (3) arranged between the first pane (1) and the second pane (2), wherein the glazing interior surface (7) includes at least a first glazing interior surface (7.1) and a second glazing interior surface (7.2),
- the plastic profile (9) includes a first plastic profile (9.1) on the first glazing interior surface (7.1) between the first pane (1) and the third pane (3) and a second plastic profile (9.2) on the second glazing interior surface (7.2) between the third pane (3) and the second pane (2),
- the main member (11) is arranged between the first pane (1) and the second pane (2), and
- the third pane (3) protrudes into the main member (11) between the first plastic profile (9.1) and the second plastic profile (9.2).

3. Insulating glazing according to one of claims 1 or 2, wherein
- the first pane contact surface (8.1) and the second pane contact surface (8.2) comprise the plastic profile (9) and the primary sealing means (10) and
- the primary sealing means (10) encloses the main member (11) on three sides.

4. Insulating glazing according to one of claims 1 to 3, wherein the plastic profile (9) has at least one opening (13), preferably a plurality of openings (13), that enable gas and moisture exchange between the main member (11) and the inner pane interspace (5).

5. Insulating glazing according to one of claims 1 through 4, wherein, in the outer pane interspace (4) between the first pane (1) and the second pane (2), a secondary sealing means (12) is arranged adjoining the primary sealing means (10), which secondary sealing means preferably includes a polymer or silane-modified polymer, particularly preferably organic polysulfides, silicones, room-temperature vulcanizing silicone rubber, high-temperature vulcanizing silicone rubber, peroxide vulcanizing silicone rubber, and/or addition vulcanizing silicone rubber, polyurethanes, and/or butyl rubber.

6. Insulating glazing according to one of claims 2 through 5, wherein the third pane (3) only partly protrudes into the main member (11), preferably by 20 % to 80 %, particularly preferably protrudes 30 % to 60 % of the entire height of the main member (11) into the main member.

7. Insulating glazing according to one of claims 2 through 5, wherein the third pane (3) protrudes beyond the entire height of the main member (11) into the main member (11) and/or the third pane (3) protrudes through the primary sealing means (10).

8. Insulating glazing according to claim 7, wherein the third pane protrudes through the secondary sealing means (12).

9. Insulating glazing according to one of claims 1 through 8, wherein the main member (11) contains at least one sealing material, preferably a hot-melt adhesive, polyisobutylene, and/or butyl rubber and a desiccant, preferably silica gels, molecular sieves, CaCl₂, Na₂SO₄, activated carbon, silicates, bentonites, zeolites, and/or mixtures thereof.

10. Insulating glazing according to one of claims 1 through 9, wherein the plastic profile (9) contains polyethylene (PE), polycarbonates (PC), polypropylene (PP), polystyrene, polybutadiene, polynitriles, polyesters, polyurethanes, polymethyl methacrylates, polyacrylates, polyamides, polyethylene terephthalate (PET), polybutylene terephthalate (PBT), acrylonitrile butadiene styrene (ABS), acrylonitrile styrene acrylester (ASA), acrylonitrile butadiene styrene/polycarbonate (ABS/PC), styrene acrylonitrile (SAN), PET/PC, PBT/PC, and/or copolymers or mixtures thereof.

11. Insulating glazing according to one of claims 1 through 10, wherein the primary sealing means (10) contains butyl rubber, polyisobutylene, polyolefin rubber, copolymers, and/or mixtures thereof.

12. Method for producing an insulating glazing according to claim 1 including a first pane (1) and a second pane (2), wherein at least
a) a spacer (6) is provided, by co-extruding a main member (11) containing a sealing material containing a desiccant and a primary sealing means (10) on a plastic profile (9),
b) a first pane (1) is mounted on a first pane contact surface (8.1) of the spacer (6) and a second pane (2) is mounted on a second pane contact surface (8.2) such that the plastic profile (9) is arranged on the glazing interior surface (7) and
c) the pane arrangement composed of the panes (1,2) and the spacer (6) is pressed together, by which means a stable adhesive bond is produced.

13. Method for producing an insulating glazing according to one of claims 2 through 11, wherein at least
a) a first plastic profile (9.1) is arranged between a first pane (1) and a third pane (3) and a second plastic profile (9.2) is arranged at the same height between the third pane (3) and a second pane (2)
b) a primary sealing means (10) and a main member (11) containing a sealing material with desiccant are coextruded onto the plastic profile (9), comprising the first plastic profile (9.1) and the second plastic profile (9.2), in the outer pane interspace (4).

14. Method for producing an insulating glazing according to one of claims 2 through 11, wherein at least
a) a main member (11) containing a desiccant is coextruded together with a primary sealing means (10) around at least a third pane (3), and, simultaneously, at least a first plastic profile (9.1) is mounted on a first glazing interior surface (7.1) and a second plastic profile (9.2) is mounted on a second glazing interior surface (7.2) directly adjacent the main member (11),
b) a first pane (1) and a second pane (2) are mounted on the pane contact surfaces (8.1, 8.2) of the spacer (6) comprising a plastic profile (9), main member (11), and a primary sealing means (10), and
c) the pane arrangement composed of at least the first pane (1), the second pane (2), the third pane (3), and the spacer (6) is pressed together, by which means a stable adhesive bond is produced.

15. Use of an insulating glazing according to one of claims 1 through 11 as building interior glazing, building exterior glazing, and/or façade glazing.

## Revendications

1. Vitrage isolant comprenant au moins une première vitre (1), une deuxième vitre (2), un espace extérieur (4) entre les vitres et, un espace intérieur (5) entre les vitres et un écarteur (6) avec une surface intérieure de vitrage (7), une première surface de contact de vitrage (8.1) et une deuxième surface de contact de vitrage (8.2), un profil en plastique (9), un joint d'étanchéité primaire (10) et un corps de base (11) contenant au moins un matériau d'étanchéité contenant un agent déshydratant, où
- le profil en plastique (9) sépare l'espace extérieur (4) de l'espace intérieure (5),
- le corps de base (11) est disposé dans l'espace extérieur (4) immédiatement adjacent au profil en plastique (9) et le dispositif d'étanchéité primaire (10) est arrangé dans l'espace extérieur (4) immédiatement adjacent au corps de base (11).

2. Vitrage isolant selon la revendication 1, comprenant au moins une troisième vitre (3) disposée entre la première vitre (1) et la deuxième vitre (2), où la surface intérieure de vitrage (7) comprend au moins une première surface intérieure de vitrage (7.1) et une deuxième surface intérieure de vitrage (7.2),
- le profil en plastique (9) comprend un premier profil en plastique (9.1) sur la première surface intérieure de vitrage (7.1) entre la première vitre (1) et la troisième vitre (3) et un deuxième profil de plastique (9.2) sur la deuxième surface intérieure de vitrage (7.2) entre la troisième vitre (3) et la deuxième vitre (2),
- le corps de base (11) est disposé entre la première vitre (1) et la deuxième vitre (2 et
- la troisième vitre (3) pénètre le corps de base (11) entre le premier profil en plastique (9.1) et le deuxième profil en plastique (9.2).

3. Vitrage isolant selon l'une des revendications 1 ou 2, où
- la première surface de contact du verre (8,1) et la deuxième surface de contact du verre (8.2) comprend le profil en plastique (9) et le joint d'étanchéité primaire (10) et
- le joint d'étanchéité primaire (10) entoure le corps de base (11) sur trois bords.

4. Vitrage isolant selon l'une des revendications 1 à 3, où le profil en plastique (9) présente au moins une ouverture (13), de préférence plusieurs ouvertures (13), qui permettent l'échange de gaz et d'humidité entre le corps de base (11) et l'espace intérieure (5).

5. Vitrage isolant selon l'une des revendications 1 à 4, où un joint d'étanchéité secondaire (12) est disposé entre la première (1) et la deuxième vitre (2) dans l'espace extérieur (4) entre les vitres contigu au joint d'étanchéité (10) primaire, qui comprend de préférence un polymère ou un polymère modifié par un silane, de manière particulièrement préférée des polysulfures organiques, des silicones, des caoutchoucs de silicone réticulés à température ambiante, des caoutchoucs de silicone réticulés à haute température, des caoutchoucs de silicone réticulés aux peroxydes et/ou des caoutchoucs de silicone réticulés par addition, des polyuréthanes et/ou des caoutchoucs au butyle.

6. Vitrage isolant selon l'une des revendications 2 à 5, où la troisième vitre (3) ne pénètre qu'une partie du corps de base (11), de préférence sur entre 20% et 80%, de manière particulièrement préférée entre 30% et 60% de la hauteur totale du corps de base (11).

7. Vitrage isolant selon une des revendications 2 à 5, où la troisième vitre (3) pénètre le corps de base (11) sur toute sa hauteur, et/ou la troisième vitre (3) passe à travers le joint d'étanchéité primaire (10).

8. Vitrage isolant selon la revendication 7, où la troisième vitre passe à travers le joint d'étanchéité secondaire (12).

9. Vitrage isolant selon l'une des revendications 1 à 8, où le corps de base (11) contient au moins un produit d'étanchéité, de préférence un adhésif thermofusible, du polyisobutylène et/ou du caoutchouc au butyle et un déshydratant, de préférence des gels de silice, des tamis moléculaires, du CaCl₂, du Na₂SO₄, du charbon actif, des silicates, des bentonites, des zéolites ou des mélanges de ceux-ci.

10. Vitrage isolant selon l'une des revendications 1 à 9, où le profil de plastique (9) contient du polyéthylène (PE), du polycarbonate (PC), du polypropylène (PP), du polystyrène, du polybutadiène, des polynitriles, du polyester, du polyuréthane, du polyméthacrylate, des polyacrylates, des polyamides, du poly(téréphtalate d'éthylène) (PET), du poly(téréphtalate de butylène) (PBT), de l'acrylonitrile-butadiène-styrène (ABS), de l'acrylonitrile-styrène-acrylate (ASA), de l'acrylonitrile-butadiène styrène/polycarbonate (ABS/PC), du styrène-acrylonitrile (SAN), du PET/PC, du PBT/PC et/ou des copolymères, ou des mélanges de ceux-ci.

11. Vitrage isolant selon l'une des revendications 1 à 10, où le joint d'étanchéité (10) primaire contient du caoutchouc au butyle, du polyisobutylène, du caoutchouc au polyoléfine, des copolymères et/ou des mélanges de ceux-ci.

12. Procédure de fabrication d'un vitrage isolant selon la revendication 1 contenant une première vitre (1) et une deuxième vitre (2), où au moins
a) un écarteur (6) est fournie, par la co-extrusion sur un profil en plastique (9) d'un corps de base (11) contenant un matériau d'étanchéité contenant un agent déshydratant et un produit d'étanchéité primaire (10),
b) une première vitre (1) est fixée sur une première surface de contact de vitrage (8.1) de l'écarteur (6) et une deuxième vitre (2) sur une deuxième surface de contact de vitrage (8.2) afin de disposer le profil en plastique (9) sur la surface intérieure de vitrage (7) et
c) l'arrangement de vitres composé des vitres (1, 2) et l'écarteur (6) est pressé ensemble, afin de produire un joint adhésif stable.

13. Procédure de fabrication d'un vitrage isolant selon au moins l'une des revendications 2 à 11, où au moins
a) un premier profil en plastique (9.1) est disposé entre une première vitre (1) et une troisième vitre (3), et un deuxième profil en plastique (9.2) est disposé au même niveau entre la troisième vitre (3) et une deuxième vitre (2),
b) un joint d'étanchéité primaire (10) et un corps de base (11) contenant un matériau d'étanchéité avec un agent déshydratant sont co-extrudés sur le profil en plastique (9), comprenant le premier profil en plastique (9.1) et le deuxième profil en plastique (9.2), dans l'espace extérieur (4) entre les vitres.

14. Procédure de fabrication d'un vitrage isolant selon l'une des revendications 2 à 11, où au moins
a) un corps de base (11) comprenant un agent déshydratant est co-extrudé autour d'au moins une troisième vitre (3) avec un joint d'étanchéité primaire (10), et en même temps au moins un premier profil en plastique (9.1) est attaché sur une première surface intérieure de vitrage (7.1) et un deuxième profil en plastique (9.2) sur une deuxième surface intérieure de vitrage (7.2) directement avoisinant le corps de base (11),
b) une première vitre (1) et une deuxième vitre (2) est attachée sur les surfaces de contact de vitrage (8.1, 8.2) de l'écarteur (6) comprenant profil en plastique (9), corps de base (11) joint et d'étanchéité (10) primaire, et
c) l'arrangement de vitres composé au moins de la première vitre (1), la deuxième vitre (2), la troisième vitre (3) et l'écarteur (6) est pressé ensemble, afin de produire un joint adhésif stable.

15. Utilisation d'un vitrage isolant selon l'une des revendications 1 à 11 comme vitrage d'intérieur dans le bâtiment, vitrage d'extérieur dans le bâtiment et/ou vitrage de façade.
